Europäisches Patentamt

European Patent Office

Office européen des brevets

(11) Publication number: **0 067 679**
**B1**

## (12) EUROPEAN PATENT SPECIFICATION

(45) Date of publication of patent specification: **04.10.89**

(51) Int. Cl.⁴: **C 23 F 13/00**

(21) Application number: **82303022.6**

(22) Date of filing: **11.06.82**

(60) Divisional application 85109176 filed on 22.07.85.

(54) Corrosion protection system.

(30) Priority: **12.06.81 US 272854**

(43) Date of publication of application:
**22.12.82 Bulletin 82/51**

(45) Publication of the grant of the patent:
**04.10.89 Bulletin 89/40**

(84) Designated Contracting States:
**AT BE CH DE FR GB IT LI LU NL SE**

(56) References cited:
**EP-A-0 014 030**
**WO-A-80/01488**
**AU-A-2 921 167**
**DE-A-2 839 085**
**GB-A-1 394 292**
**US-A-4 255 241**

(73) Proprietor: **RAYCHEM CORPORATION (a
Delaware corporation)
300 Constitution Drive
Menlo Park, California 94025 (US)**

(72) Inventor: **Macknick, Brian A.
4802 Windermere Drive
Newark California 94560 (US)**
Inventor: **Stewart, Ray F.
4016-102 Farm Hill Boulevard
Redwood City California 94061 (US)**
Inventor: **Masia, Michael
258 Grand Street
Redwood City California 94063 (US)**

(74) Representative: **Jones, David Colin et al
Raychem Limited Intellectual Property Law
Department Faraday Road Dorcan
Swindon, Wiltshire SN3 5HH (GB)**

Courier Press, Leamington Spa, England.

# EP 0 067 679 B1

**Description**

It is well known to protect an electrically conductive substrate from corrosion by establishing a potential difference between the substrate and a spaced-apart electrode. The substrate and the electrode are connected to each other through a power supply of constant sign (DC or rectified AC) and the circuit is completed when electrolyte is present in the space between the substrate and the electrode. In most such impressed current systems, the substrate is the cathode (i.e. receives electrons). However, with substrates which can be passivated, e.g. Ni, Fe, Cr and Ti and their alloys, it is sometimes also possible to use impressed current systems in which the substrate is the anode. In both cathodic and anodic systems, the substrate is often provided with a protective insulating coating; in this case the impressed current flows only through accidentally exposed portions of the substrate. If the system is to have an adequate life, the electrode must not itself be corroded at a rate which necessitates its replacement; this is in contrast to the "sacrificial anodes" which are used in galvanic protection systems. The electrode must also have a surface which is not rendered ineffective by the current passing through it or by the electrochemical reactions taking place at its surface, such as the evolution of chlorine gas.

The electrode and the power supply must be such that the current density at all points on the substrate is high enough to prevent corrosion but not so high as to cause problems such as damage to the substrate (e.g. embrittlement) or disbonding of a protective coating on it. The power consumption of the system depends *inter alia* on the distance between the various parts of the substrate and electrode. In view of these factors, the theoretically best type of electrode is one which has a shape corresponding generally to the shape of the substrate and which is relatively close to all points on the substrate. Such an electrode is referred to herein as a "distributed electrode". Distributed electrodes have been provided in the past, for example, by a layer of conductive paint which is coated over an electrically insulating coating on the substrate, or by a platinum-coated wire placed adjacent to the substrate (usually inside a pipe). Reference may be made, for example, to GB—A—1394292. This document discloses an impressed current corrosion protection system wherein the metal substrate is covered with an insulating layer, and the insulating layer is then covered with an electrically conductive coating applied in fluid form and containing elemental carbon.

However, the known distributed electrodes suffer from serious practical disadvantages. Conductive paints require careful, craft-sensitive application of the paint layer and of the insulating layer; and even when the layers are correctly applied, the paint (whose thickness is less than 200 μm, usually less than 100 μm) can easily be damaged either by mechanical abrasion or by blistering or peeling due to passage of current. Furthermore, unless the paint is of very low resistivity (which makes it difficult to apply and/or very expensive and/or more liable to damage), either the size of the substrate is very limited or there must be bus bars between the paint and the insulating layer. Such bus bars, especially if exposed as a result of damage to the paint, are liable to corrosion. The disadvantages of platinum-coated wires are likewise numerous. Platinum is very expensive (which is of course why platinum-coated wires, rather than pure platinum wires, are used) and platinum coatings are very easily damaged, e.g. by flexing of the wire. The use of platinum-coated wires is, therefore, restricted to situations in which such damage can be minimized. In addition, it is essential that the core of the wire, if exposed, is not liable to corrosion, and this further increases the cost of the electrode. In practice, platinum-coated wires comprise a core of titanium or niobium-coated copper. US—A—4255241 describes a particular way of using such a known anode.

Because of difficulties associated with distributed electrodes, most practical impressed current corrosion protection systems make use of a plurality of discrete electrodes which are spaced apart at some distance from the substrate. Typically, the anodes are rigid rods which are composed of (a) graphite or (b) a thermoset resin or other rigid matrix which is highly loaded with graphite or other carbonaceous material. Because of the distance between the electrodes and the substrate, large power supplies are often needed and interference from other electrical systems (including other corrosion protection systems) is common. In addition, the high current density at the electrode can give rise to problems, e.g. in dispersing gases generated by electrochemical reactions at the surface of the electrode.

We have now discovered that the disadvantages of known electrodes can be mitigated or overcome through the use of a distributed electrode whose electrically active outer surface is provided by an element which is composed of a conductive polymer which is at least 500 μm, preferably at least 1000 μm, thick. The term "conductive polymer" is used herein to denote a composition which comprises a polymer component, and dispersed in the polymer component, a particulate conductive filler which has good resistance to corrosion, especially carbon black or graphite.

Accordingly, in one aspect the present invention provides a method of protecting an electrical conductive substrate from corrosion by establishing a potential difference between the substrate and an anode which comprises a low resistance core electrically surrounded by a conductive polymer composition, wherein the anode is an electrode spaced apart from the substrate, the electrode being in the form of an elongate flexible strip which can be bent through an angle of 90° over a 10 cm radius, the electrode comprising

(1) a continuous, elongate core which is composed of a material having a resistivity at 23°C of less than $5 \times 10^{-4}$ ohm · cm and a resistance at 23°C of less than 0.03 ohm/meter; and

(2) an element which

2

EP 0 067 679 B1

(i) is composed of a conductive polymer composition which has an elongation of at least 10%, according to ASTM D1708,

(ii) provides at least a part of the electrochemically active outer surface of the electrode, and

(iii) is in the form of a coating which electrically surrounds the core and is in electrical contact with the core, and which is at least 500 µm thick.

It is often desirable to use the maximum possible length of electrode between power tap-in points. In investigating the use of conductive polymer electrodes in such situations, we realised that a property of an electrode material which we have called the "Quasi-Tafel Constant" and which is determined by tests as described below, has an important effect on the maximum length of the electrode that can be employed to produce a desired level of corrosion protection. The Quasi-Tafel Constant is closely related to, and can be the same as, the well-known Tafel Constant (see for example Pages 308—310 of "Corrosion Engineering" by Fontana and Greene, 2nd Edition, published in 1978 by McGraw Hill). However, the test method defined below takes into account other variables of a practical corrosion protection system.

For the most common corrosion problems, in which water containing salt (NaCl) is the corroding electrolyte, the relevant Quasi-Tafel Constant of the material at the surface of the electrode can be determined by the following procedure. A sample of the material having a known surface area, e.g. of about 1 cm$^2$, is used as one electrode in an electrochemical cell containing a 5 molar solution of sodium chloride at 50°C. The other electrodes are carbon rods. The potential of the sample is measured using a saturated calomel electrode (SCE) and controlled by a potentiostat. The potential of the sample is adjusted to some desired level and the cell current is monitored. The current decays from a relatively large value to a steady state. The steady state current is measured. Measurements are made using voltages which produce steady state currents corresponding to the current densities which different parts of the electrode will have in the corrosion protection system. The potential is plotted against the log of the current density. The average slope of the plot is calculated (by a least squares fit) over a designated current density range and is expressed as millivolts/decade, i.e. the change in voltage (in millivolts) over which the current changes by a factor of 10.

Where references are made herein to particular values for a Quasi-Tafel Constant, they are measured by the method just described. However, for other corrosive mediums, a similar test can be carried out using the appropriate electrolyte. The higher the Quasi-Tafel Constant, the longer the usable length of the electrode, providing that the resistance of the electrode per unit length is sufficiently low. The conductive polymers which are preferably used in the present invention have a Quasi-Tafel Constant of at least 300, more preferably at least 400, particularly at least 500, millivolts/decade over a current density range of 1 to 500 microamps/cm$^2$.

In the invention, the electrode is in the form of a flexible strip comprising a low resistance core. As an example, the electrode may comprise a metal wire, and a conductive polymer element which is in electrical contact with the core. By flexible is meant that the strip can be bent through an angle of 90° over a 10 cm radius, and back again, without damage. The length of the strip is many times, e.g. at least 100 times, often at least 1000 times, its smallest dimension. The strip can be round or of any other cross-section. At least a part of the outer surface of the electrode is electrically active and is composed of conductive polymer.

A particularly preferred form of flexible electrode, which is suitable for use in an impressed current corrosion protection system and which is novel *per se* and forms part of the present invention, comprises an elongate electrode which is in the form of an elongate flexible strip which can be bent through an angle of 90° over a 10 cm radius, the electrode characterized by comprising

(1) a continuous, elongate core which is composed of a material having a resistivity at 23°C of less than $5\times10^{-4}$ ohm · cm and a resistance at 23°C of less than 0.03 ohm/meter; and

(2) an element which

(i) is composed of a conductive polymer composition which has an elongation of at least 10%,

(ii) provides at least a part of the electrochemically active outer surface of the electrode, and

(iii) is in the form of a coating which electrically surrounds the core and is in electrical contact with the core, and which is at least 500 µm thick.

Preferably, the electrode is characterized in that the core has a resistance at 23°C of less than 0.003 ohm/metres and is composed of a material having a resistivity at 23°C of less than $3\times10^{-5}$ ohm · cm.

It is noted that the core of an electrode as defined above does not form part of the electrochemically active outer surface of the electrode, which is provided solely by the conductive polymer element (2). Furthermore, the thickness and elongation of element (2) are such that accidental exposure of the core is extremely unlikely. The core can therefore be selected for its low resistance and physical properties, without worrying about corrosion thereof. The core can be a single wire, which is preferably stranded, or there can be a plurality of separate core elements which together make up the core.

Contact between the conductive polymer surface of the electrode and a conducting surface should be avoided and for some uses, the electrode preferably comprises an electrolyte-permeable non-conducting shield over the electrochemically active surface. Such a shield can be provided by a shielding element, e.g. a braid or mesh or perforated tube, which is composed of an electrically insulating material and provides 10 to 90%, usually 10 to 50%, of the total outer surface of the electrode.

Conductive polymers are well known, e.g. for use in electrical heaters and circuit control devices, and

3

conductive polymers suitable for use in the present invention can be selected from known materials having regard to the disclosure in this specification.

The resistivity of the conductive polymer at 23°C is preferably 0.1 to $10^3$ ohm · cm, particularly 1 to 100 ohm · cm, especially 1 to 50 ohm · cm. If the amount of conductive filler is increased too much, e.g. so that the resistivity is below 0.1 ohm · cm, the physical properties, especially elongation, of the polymer become unsatisfactory and the polymer is difficult to shape. If the resistivity is more than $10^3$ ohm · cm, the electrode often fails to meet current density requirements. The conductive polymer will preferably pass a current density of at least 1 mA/cm$^2$, more preferably at least 10 mA/cm$^2$, under the conditions of ASTM G5-72 (sample polarised to +3.0 volts versus an SCE in 0.6 molar KCl solution at 25°C).

So that the electrode has good flexibility, the conductive polymer preferably has an elongation of at least 10%, particularly at least 25%, as determined by the method of ASTM D 1708 on a pressed film sample (2.23×0.47×0.13 cm) at a cross-head speed of 5 cm/min.

So that the conductive polymer can easily be shaped, it preferably has a melt viscosity at its processing temperature [which is preferably within 30°C of its softening point (melting point for a crystalline polymer)] of less than $10^8$ poise, particularly less than $10^7$ poise. [Melt viscosities referred to herein are measured with a mechanical spectrometer on a pressed film sample 1 mm thick, using parallel plate geometry at 10% strain and a shear rate of 1 radian/second]. Shaping of the conductive polymer is preferably carried out by an extrusion process. Shaping should be effected in a way which ensures that the conductive filler is present in satisfactory amounts on the exposed surface of the electrode.

The polymeric matrix of the conductive polymer can be composed of one or more polymers, which may be thermoplastics, rubbers or thermoplastic rubbers, and which are preferably selected so that they do not degrade when the electrode is in use. Suitable polymers include olefin homopolymers and copolymers, e.g. polyethylene and ethylene/ethyl acrylate copolymers; fluorinated polymers, e.g. polyvinylidene fluoride and vinylidene fluoride/hexafluoropropylene copolymers; chlorinated polyolefins, e.g. chlorinated polyethylene; and acrylate rubbers.

The conductive filler of the conductive polymer must have good resistance to corrosion. Metal fillers are, therefore, generally to be avoided for use with most corrosive liquids. Carbonaceous fillers, especially carbon black and graphite, are preferred. Other fillers which may be useful under suitable circumstances include metallic oxides, e.g. magnetite, lead dioxide and nickel oxide. The filler is preferably particulate with a largest dimension less than 0.1 mm, particularly less than 0.01 mm; the filler may contain, in addition, a minor proportion, e.g. up to 30% by weight, of a fibrous filler, the length of the fibers usually being less than 0.6 cm.

The conductive polymer can also contain other conventional ingredients such as antioxidants, non-conducting fillers and process aids.

The conductive polymer can be cross-linked, e.g. chemically or by irradiation.

Substrates which can be protected by the present invention include pipes, lead-sheathed telephone cables, well-casings, reinforcing bars in concrete (strip electrodes can be laid down with the reinforcing bars and the concrete cast around them) and tanks and vessels containing corrosive fluids. The substrate can for example be buried in soil or immersed in sea water or exposed to the atmosphere (when corrosion is caused, for example, by rain or sea spray). The substrate will often be composed of ferrous metal, but many other conductive substrates can be protected. Two or more electrodes can be used to protect the same substrate. The electrodes can be powered from both ends or from only one end, in which case the far end of the electrode is preferably sealed, e.g. by a heat-shrinkable end cap.

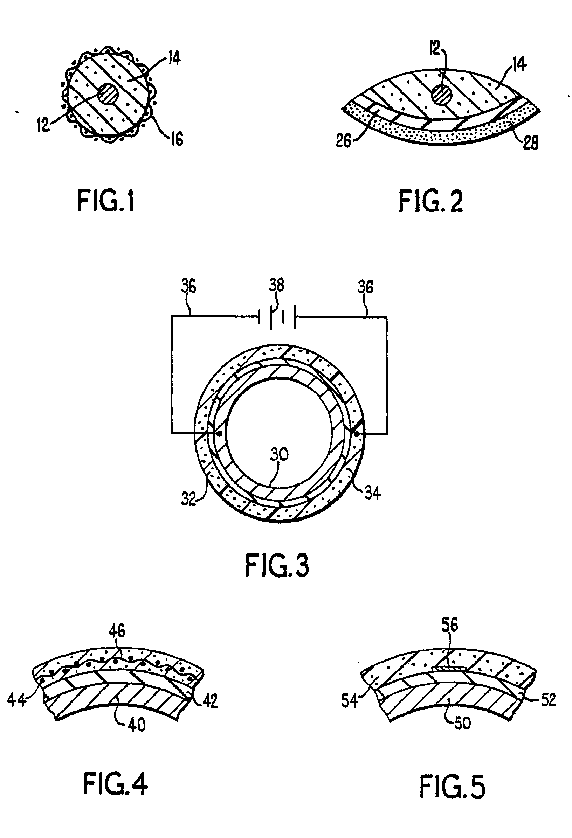

Referring now to the drawings, Figures 1 and 2 are cross-sections through strip electrodes comprising a highly conductive core 12 which is surrounded by a conductive polymer element 14. In Figure 1, the element 14 is surrounded by polymeric braid 16. In Figure 2 one side of element 14 is covered by insulating layer 26 which is in turn coated with adhesive 28, making the electrode suitable for sticking to a substrate.

Figure 3 is a cross-section through a pipe 30 which is protected by means of a conductive polymer electrode 34 formed by shrinking a conductive polymer tube around an insulating layer 32 surrounding the pipe. The pipe 30 and the electrode 34 are connected by leads 36 to battery 38. Figures 4 and 5 show different methods of bussing a conductive polymer electrode in the form of a sheet, e.g. as shown in Figure 3. In Figure 4, metal mesh 46 is embedded in a conductive polymer layer 46 which is separated from pipe 40 by insulating layer 44. In Figure 5, metal strip 56 is placed between conductive polymer layer 54 and insulating layer 52 which surrounds pipe 50. The bus 56 can be stuck to the insulating layer 52 by an insulating adhesive (not shown) and to the conductive layer 54 by a conducting adhesive (not shown).

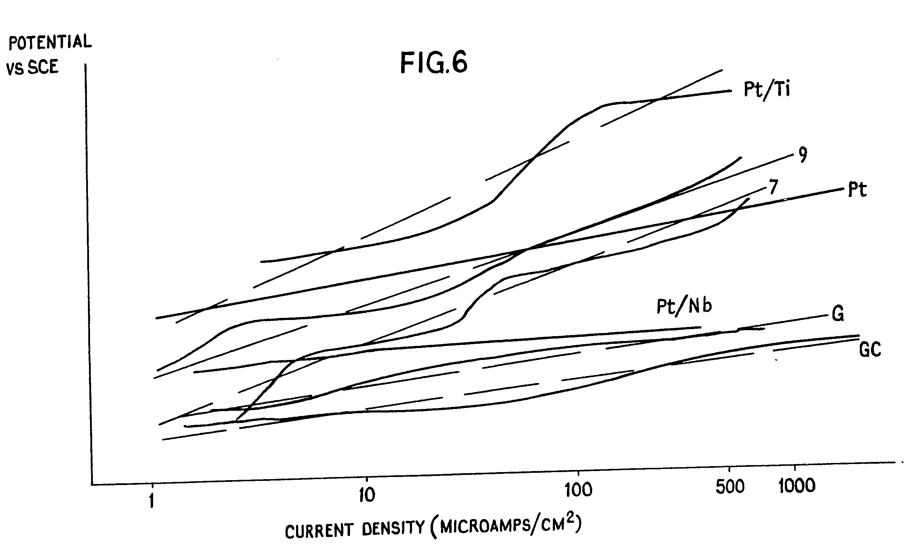

Figure 6 shows, for a number of different electrode materials, the results obtained by the procedure described above for measuring the Quasi-Tafel Constant. Results are shown for conductive polymer compositions 7 and 9 in the Examples below (labelled 7 and 9 respectively), for platinum disc (labelled Pt), for a platinum-coated wire in which the core is niobium-coated copper (labelled Pt/Nb), for a platinum-coated wire in which the core is titanium (labelled Pt/Ti), for a graphite electrode (labelled G), and for a glassy carbon electrode (labelled GC). The slopes of the dashed lines in Figure 6 are the Quasi-Tafel Constants. The vertical axis of Figure 6 shows the voltage on the same scale for all the electrodes, but for clarity (since it is the slope of the plot, not its absolute position, which is important) some of the plots have been transposed vertically. It will be noted that the conductive polymer electrodes have substantially higher Quasi-Tafel Constants than the known electrodes, with the exception of platinum-coated titanium

4

wire. However, quite apart from its high cost, platinum-coated titanium wire is not very satisfactory as a long line electrode, because of the relatively high resistivity of the titanium core and because the plot in Figure 6 has a high slope at low current densities but a low slope at the current densities in the range of 150—500 microamps/cm$^2$ most likely to be used in practice over the length of most of the electrode.

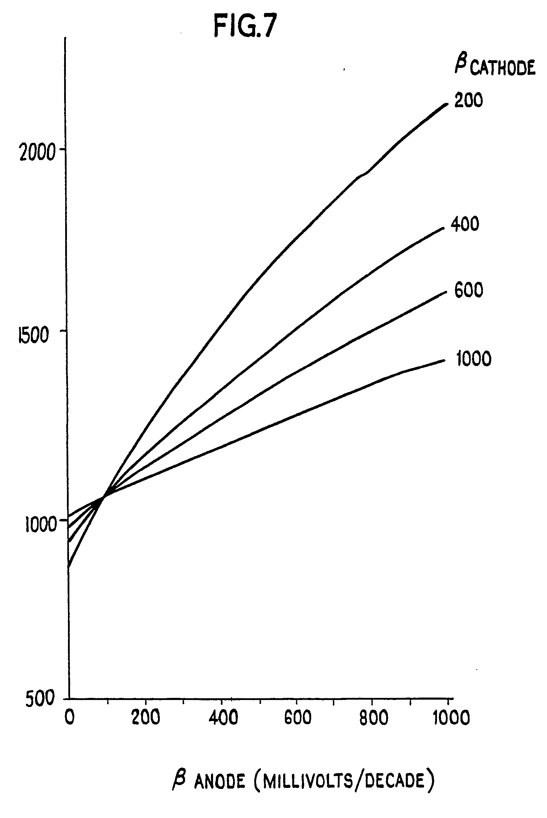

Figure 7 shows how the maximum usable length of an anode varies with the Tafel Constants of the anode and the cathode ($B_{anode}$ and $B_{cathode}$) respectively, making reasonable assumptions as to numerous variables in a practical system, e.g. the resistance per unit length of the anode and substrate, the geometry of the system, the resistivity of the electrolyte and the current densities required for adequate protection. In constructing Figure 7, it was assumed that the anode and cathode would give straight line plots in Figure 6. This is not in fact always strictly true, but Figure 7 remains substantially correct when a measured Quasi-Tafel Constant is used. For any particular system, once the different variables have been defined, a figure like Figure 7 can be constructed to show how the maximum usable length of the anode varies with the Tafel Constant.

The invention is illustrated by the following Examples, in which parts and percentages are by weight.

The ingredients of the conductive polymers used in the Examples are set out in the Table 1 below. They were mixed together in a Banbury or Brabender mixer until a uniform mixture had been obtained. The resistivities given in the Table were measured on slabs pressed from the various mixtures.

TABLE 1

| Composition No. | 1 | 2 | 3 | 4 | 5 | 6 | 7 | 8 | 9 | 10 |
|---|---|---|---|---|---|---|---|---|---|---|
| **Polymers** | | | | | | | | | | |
| Thermoplastic rubber | 60 | | | 44.8 | 45 | 65 | 44.8 | 45 | | |
| Polyethylene | | 24 | | | | | | | | |
| Ethylene/acrylic acid copolymer | | 36 | | | | | | | | |
| Polyvinylidene fluoride | | | 68 | | | | | | 36.5 | |
| Vinylidene fluoride/ hexafluoropropylene copolymer | | | 6 | | | | | | | |
| Chlorinated polyethylene | | | | | | | | | | 65 |
| Acrylate rubber | | | | | | | | | 24.4 | |
| **Conductive filler** | | | | | | | | | | |
| Shawinigan acetylene black | 40 | | | 50 | | | | | 32 | 35 |
| Statex N 765 carbon black | | 40 | | | | | | | | |
| Furnex N 765 carbon black | | | 23 | | 55 | 35 | 50 | 55 | | |
| **Additives** | | | | | | | | | | |
| Antioxidant | | | | 0.2 | | | 0.2 | 0.1 | | |
| Radiation cross-linking agent | | | 1 | | | | | | | |
| Processing aid | | | | 5.0 | | | 5.0 | 4.0 | | |
| Calcium carbonate | | | 2 | | | | | 3.0 | | |
| Resistivity at 23°C (ohm · cm) | 20 | 4 | | 11.4 | | 12.5 | 2.5 | 0.6 | 2.0 | 29 |

The various ingredients are further identified as follows. The thermoplastic rubber was Uniroyal TPR 1900 in Composition 1 and Uniroyal TPR 5490 in Compositions 4, 5, 6, 7 and 8. The polyvinylidene fluoride was Pennwalt Kynar 460 in Composition 3 and Solvay Solef 1010 in Composition 9. The vinylidene fluoride/hexafluoropropylene copolymer was Du Pont Viton AHV. The chlorinated polyethylene was Dow CPE-12 II. The acrylate rubber was Goodrich Hycar 4041.

Table 2 below gives the Quasi-Tafel Constants for Compositions 4 and 6—10 and for various commerically available electrodes.

TABLE 2

|  | Quasi-Tafel Constant |
| --- | --- |
| Composition 4 | 462 |
| Composition 6 | 472 |
| Composition 7 | 530 |
| Composition 8 | 449 |
| Composition 9 | 689 |
| Composition 10 | 330 |
| Platinum disk | 45 |
| Glassy carbon electrode | 165 |
| Graphite rod | 211, 177 & 166 |
| Platinum on niobium-coated copper wire | 119 & 74 |
| Platinum on titanium wire | 919 & 633 |

Example 1

An electrode was made by melt-extruding Composition 1 around a nickel-plated copper stranded wire (19 strands, 20 gauge, diameter 0.1 cm) to give an electrode of 0.63 cm diameter.

A 30 cm length of steel pipe of diameter 5 cm was covered by heat-shrunk insulating polyethylene tubing. In the middle of the pipe, a 1.25 cm wide strip of the tubing was removed, exposing 20 cm$^2$ of the pipe. A 30 cm length of the electrode was secured to the pipe, making sure that no contact was made between the exposed pipe and the electrode. One end of the electrode was connected to a DC power supply, to which one end of the pipe was also connected. The other end of the electrode was insulated by a polymeric end cap. The pipe and electrode were immersed in sea water, and the power supply adjusted to maintain the pipe at a voltage of 0.92 volts cathodic to an SCE. No rust was visible on the exposed portion of the pipe after 60 days.

A pipe which was similarly treated, but not protected from corrosion, showed rusting within 24 hours.

Example 2

1.9 m of the electrode of Example 1 was buried in soil of 3000 ohm · cm resistivity and pH 5.2. 5 cm above the electrode, a 5 cm diameter steel pipe was buried in the same soil to a depth of 10 cm. The pipe was coated with insulating material except over an exposed surface of 100 cm$^2$. The free corrosion potential of the pipe was −0.56 volts relative to a saturated copper-copper sulfate electrode. The pipe and anode were connected to a DC power supply which was adjusted daily to maintain the pipe at −1.0 volts relative to the copper-copper sulfate electrode. After 12 days, the current flow as 4.6 mA. The level of protection obtained satisfied NACE Standard RP-10-69, paragraphs 6.3.1.1 to 6.3.1.3.

Example 3

30 cm of the electrode of Example 1, covered by a nylon braid, was placed inside a 30 cm length of 10 cm diameter steel pipe whose interior was coated with epoxy resin except over a 0.6 cm wide strip. The pipe was filled with sea water and polarized to −0.92 volts relative to an SCE. The current required was 1.21 mA initially and 0.7 mA after 68.5 hours. Over 60 days (during which time the sea water was replenished occasionally), no rust formed on the protected pipe. In a control pipe which was similarly treated but not protected from corrosion, large quantities of rust appeared.

# EP 0 067 679 B1

## Example 4

After attaching an electrical lead thereto, a 2.5×7.5 cm piece of sheet steel was covered with an insulating adhesive. A 2.5×7.5×0.04 cm conductive sheet prepared from Composition 2 was stuck to the adhesive, and an insulated electrical lead was attached to the conductive sheet. A section of the steel, 0.63 cm in diameter, was exposed by cutting through the conductive sheet and underlying adhesive. A drop of water containing 3.5% NaCl was placed on the exposed steel and made contact with the conductive sheet. The leads were connected to a DC power supply and the steel polarized to −0.96 volts relative to an SCE. A control sample was similarly constructed except that an insulating polyethylene sheet was used instead of the conductive sheet. Both samples were tested in accordance with ASTM G44-75. After 24 hours, the control sample was corroded and the protected sample was not.

## Example 5

Composition 3 was extruded as a 4.6 cm diameter 0.8 mm thick tube. The tube was irradiated to 10 Megarads and then expanded to 8.3 cm diameter and cooled in the expanded state to make it heat-shrinkable. A 30 cm length of 5 cm diameter steel pipe was sand-blasted and solvent-wiped, and then insulated by shrinking over it a heat-recoverable insulating polymeric sleeve lined with a hot melt adhesive. A patch of insulating adhesive was applied to one side of the insulated pipe and a copper bus bar placed on the opposite side. The tubing prepared from Composition 3 was shrunk onto the insulated pipe, and one end of the assembly covered with a heat-shrinkable end cap. A section of the pipe 0.63 cm in diameter was exposed by cutting through the covering layers, including the patch of adhesive. The pipe was placed in an aqueous salt solution (1% NaCl, 1% $Na_2SO_4$, 1% $Na_2CO_3$) such that the exposed pipe was completely wetted, and the pipe and bus bar were connected to a DC power supply such that the pipe was maintained at 1.425 volts cathodic to an SCE. A potential of 3 volts was required, and produced a current of 2.5 mA. No rust appeared on the exposed pipe during a 48 hour test period.

## Example 6

A polarization curve was prepared for a cylindrical sample (0.953 cm diameter) of Type 430 stainless steel immersed in $H_2SO_4$, 1.0 normal, using a graphite cathode, following the procedure of ASTM G-5 except that the temperature was 23°C and the graphite electrode was used instead of a platinum electrode. It was found that a voltage of 0.45 volts relative to an SCE was the point of greatest anodic protection.

An electrode as in Example 1 was then used to provide anodic protection for the cylindrical sample. The immersed surface area of the electrode was 10 $cm^2$ and the immersed surface area of the sample was 5.1 $cm^2$. The electrode and the sample were connected to a DC power supply and the sample was maintained at a potential of 0.446 volts relative to an SCE for 48 hours; at the steady state, the average current was about 2 microamps. The weight loss of the sample was about 0.16%. A similar sample, unprotected, suffered a weight loss of about 26%.

## Claims

1. An elongate electrode which is suitable for use in an impressed current corrosion protection system and is in the form of an elongate flexible strip which can be bent through an angle of 90° over a 10 cm radius, comprising

(1) a continuous, elongate core which is composed of a material having a resistivity at 23°C of less than $5\times10^{-4}$ ohm · cm and a resistance at 23°C of less than 0.03 ohm/meter; and

(2) an element which

(i) is composed of a conductive polymer composition which has an elongation of at least 10%, according to ASTM D1708,

(ii) provides at least a part of the electrochemically active outer surface of the electrode, and

(iii) is in the form of a coating which electrically surrounds the core and is in electrical contact with the core, and which is at least 500 µm thick.

2. An electrode according to claim 1 characterized in that the core has a resistance at 23°C of less than 0.003 ohm/meter and is composed of a material having a resistivity at 23°C of less than $3\times10^{-5}$ ohm · cm.

3. An electrode according to claim 1 or 2 characterized in that the conductive filler in the conductive polymer composition is carbon black or graphite, and the resistivity of the composition at 23°C is 0.1 to $10^3$ ohm · cm, preferably 1 to 100 ohm · cm.

4. An electrode according to any one of the preceding claims characterized in that the conductive filler in the conductive polymer composition is acetylene black.

5. An electrode according to any one of the preceding claims characterized in that (a) the conductive polymer composition has an elongation of at least 25% and (b) the coating is at least 1000 µm thick.

6. An electrode according to any one of the preceding claims characterized by having a Quasi-Tafel Constant of at least 300, preferably at least 400, particularly at least 500, millivolts/decade over a current density range of 1 to 500 microamps/$cm^2$, the Quasi-Tafel Constant of the electrode being measured using the following procedure:

(a) sample of the electrode having a known surface area is made an electrode in an electrochemical cell

8

in which the other electrodes are carbon rods and the electrolyte is a 5 molar solution of sodium chloride at 50°C;

(b) the potential of the sample is adjusted to a predetermined level, and the cell current which decays from a relatively large value to a steady state value monitored;

(c) the Tafel constant is calculated as the average slope of a graph plotted of the predetermined potential against the steady state current density.

7. A method of protecting an electrical conductive substrate from corrosion by establishing a potential difference between the substrate and an anode which comprises a low resistance core electrically surrounded by a conductive polymer composition, characterized in that the anode is an electrode as claimed in any one of the preceding claims and is spaced apart from the substrate.

8. A method according to claim 7 characterized in that the substrate comprises reinforcing bars in concrete.

9. A method according to claim 7 characterized in that the substrate is buried in soil, particularly a pipe or a lead-sheathed tleephone cable.

10. A method according to claim 7 characterized in that the substrate is immersed in sea water or is a tank or a vessel containing a corrosive fluid.

**Patentansprüche**

1. Längliche Elektrode, die geeignet ist zur Verwendung in einem mit Fremdstrom gespeisten Korrosionsschutzsystem und in Form eines länglichen flexiblen Streifens vorliegt, der über einen Radius von 10 cm um einen Winkel von 90° gebogen werden kann, umfassend

(1) einen durchgehenden, länglichen Kern, der aus einem Material besteht, das einen spezifischen Widerstand von weniger als $5 \times 10^{-4}$ Ohm · cm bei 23°C sowie einen Widerstandswert von weniger als 0,03 Ohm/Meter bei 23°C besitzt; und

(2) ein Element, das

(i) aus einer leitenden Polymerzusammensetzung besteht, die gemäß ASTM D1708 eine Dehnung von mindestens 10% hat,

(ii) zumindest einen Teil der elektrochemisch aktiven Außenoberfläche der Elektrode bildet und

(iii) in Form einer Beschichtung vorliegt, die den Kern elektrisch umgibt und mit dem Kern in elektrischem Kontakt steht, und die zumindest 500 µm dick ist.

2. Elektrode nach Anspruch 1, dadurch gekennzeichnet, daß der Kern einen Widerstandswert von weniger als 0,003 Ohm/Meter bei 23°C hat und aus einem Material besteht, das einen spezifischen Widerstand von weniger als $3 \times 10^{-5}$ Ohm · cm bei 23°C hat.

3. Elektrode nach Anspruch 1 oder 2, dadurch gekennzeichnet, daß der leitende Füllstoff in der leitenden Polymerzusammensetzung Ruß oder Graphit ist und daß der spezifische Widerstand der Zusammensetzung 0,1 bis $10^3$ Ohm · cm, vorzugsweise 1 bis 100 Ohm · cm bei 23°C beträgt.

4. Elektrode nach einem der vorherigen Ansprüche, dadurch gekennzeichnet, daß der leitende Füllstoff in der leitenden Polymerzusammensetzung Acetylenruß ist.

5. Elektrode nach einem der vorherigen Ansprüche, dadurch gekennzeichnet, daß (a) die leitende Polymerzusammensetzung eine Dehnung von mindestens 25% hat und daß (b) die Beschichtung mindestens 1000 µm dick ist.

6. Elektrode nach einem der vorherigen Ansprüche, dadurch gekennzeichnet, daß sie eine Quasi-Tafelkonstante von mindestens 300, vorzugsweise von mindestens 400, insbesondere von mindestens 500 Millivolt/Dekade über einen Stromdichtebereich von 1 bis 500 µA/cm² hat, wobei die Quasi-Tafelkonstante der Elektrode gemäß der folgenden Prozedur gemessen wird:

(a) eine Probe der Elektrode mit einem bekannten Oberflächenwert wird zu einer Elektrode in einer elektrochemischen Zelle gemacht, in der die anderen Elektroden Kohlenstoffstangen sind und der Elektrolyt eine 5-molare Lösung von Natriumchlorid bei 50°C ist;

(b) das Potential der Probe wird auf einen vorgegebenen Pegel eingestellt, und der Zellenstrom, der von einem relativ hohen Wert auf einen stabilen Zustandswert abklingt, wird überwacht;

(c) die Tafelkonstante wird berechnet als durchschnittliches Gefälle eines Graphen, aufgetragen vom vorgegebenen Potential gegenüber der Stromdichte des stabilen Zustandes.

7. Verfahren zum Schützen eines elektrisch leitenden Substrats gegen Korrosion durch Ausbilden einer Potentialdifferenz zwischen dem Substrat und einer Anode, die einen Kern mit niedrigem Widerstand aufweist, der elektrisch von einer leitenden Polymerzusammensetzung umgeben ist, dadurch gekennzeichnet, daß die Anode eine Elektrode, wie in einem der vorherigen Ansprüche beansprucht, ist und von dem Substrat beabstandet ist.

8. Verfahren nach Anspruch 7, dadurch gekennzeichnet, daß das Substrat Verstärkungsstangen in Beton aufweist.

9. Verfahren nach Anspruch 7, dadurch gekennzeichnet, daß das Substrat im Boden eingebettet ist, insbesondere ein Rohr oder ein bleiummanteltes Telefonkabel.

10. Verfahren nach Anspruch 7, dadurch gekennzeichnet, daß das Substrat in Seewasser eingetaucht bzw. verlegt ist oder ein Tank oder ein Behälter ist, der ein korrosives Fluid enthält.

# EP 0 067 679 B1

**Revendications**

1. Electrode allongée qui est appropriée à l'utilisation dans un système de protection contre la corrosion par application de courant et a la forme d'une bande allongée flexible qui peut être courbée en faisant un angle de 90° sur un rayon de 10 cm, comprenant:

(1) une âme continue allongée qui est constituée d'un matériau ayant une résistivité à 23°C inférieure à $5\times10^{-4}$ ohm $\cdot$ cm et une résistance à 23°C inférieure à 0,03 ohm/m et

(2) un élément qui:

(i) est constitué d'une composition de polymère conductrice ayant un allongement d'au moins 10% selon la méthode d'essai ASTM D 1708,

(ii) fournit au moins une partie de la surface externe électrochimiquement active de l'électrode et

(iii) est sous la forme d'un revêtement qui entoure l'âme électriquement et est en contact électrique avec l'âme et qui a au moins 500 µm d'épaisseur.

2. Electrode selon la revendication 1, caractérisée en ce que l'âme a une résistance à 23°C inférieure à 0,003 ohm/m et est constituée d'un matériau ayant une résistivité à 23°C inférieure à $3\times10^{-5}$ ohm $\cdot$ cm.

3. Electrode selon la revendication 1 ou 2, caractérisée en ce que la charge conductrice dans la composition de polymère conductrice est du noir de carbone ou du graphite et en ce que la résistivité de la composition à 23°C est de 0,1 à $10^3$ ohm $\cdot$ cm, de préférence de 1 à 100 ohm $\cdot$ cm.

4. Electrode selon l'une des revendications précédentes, caractérisée en ce que la charge conductrice dans la composition de polymère conductrice est du noir d'acétylène.

5. Electrode selon l'une quelconque des revendications précédentes, caractérisée en ce que (a) la composition de polymère conductrice a un allongement d'au moins 25% et (b) le revêtement a au moins 1000 µm d'épaisseur.

6. Electrode selon l'une des revendications précédentes, caractérisée en ce qu'elle a une quasi-constante de Tafel d'au moins 300, de préférence d'au moins 400, en particulier d'au moins 500 milli-volts/dizaine dans un intervalle de densité de courant allant de 1 à 500 microampères/cm$^2$, la quasi-constante de Tafel de l'électrode étant mesurée selon le mode opératoire suivant:

(a) un échantillon de l'électrode ayant une aire connue est monté comme électrode dans une pile électrochimique dans laquelle les autres électrodes sont des baguettes de carbone et l'électrolyte est une solution de chlorure de sodium 5 M à 50°C;

(b) le potentiel de l'échantillon est ajusté à un niveau prédéterminé et l'intensite du courant de la pile qui baisse d'une valeur relativement grande jusqu'à une valeur en régime permanent est contrôlée;

(c) la quasi-constante de Tafel est calculée comme étant la pente moyenne d'un graphe représentant le potentiel prédéterminé en fonction de la densité de courant en régime permanent.

7. Procédé de protection d'un substrat électroconducteur contre la corrosion par établissement d'une différence de potentiel entre le substrat et une anode qui comprend une âme de faible résistance entourée électriquement par une composition de polymère conductrice, caractérisée en ce que l'anode est une électrode telle que revendiquée dans l'une des revendications précédentes et qu'elle est séparée du substrat.

8. Procédé selon la revendication 7, caractérisé en ce que le substrat comprend des barres d'armature dans du béton.

9. Procédé selon la revendication 7, caractérisé en ce que le substrat est enterré dans le sol et que c'est en particulier un tuyau ou un câble téléphonique à gaine de plomb.

10. Procédé selon la revendication 7, caractérisé en ce que le substrat est immergé dans de l'eau de mer ou est un réservoir ou un récipient contenant un fluide corrosif.

10

FIG.1

FIG.2

FIG.3

FIG.4

FIG.5

FIG.6

POTENTIAL VS SCE

CURRENT DENSITY (MICROAMPS/CM$^2$)

Pt/Ti

9

7

Pt

Pt/Nb

G

GC

1    10    100    500    1000

EP 0 067 679 B1

# FIG.7